Europäisches Patentamt

European Patent Office

Office européen des brevets

(11) Publication number: **0 368 285**
**A2**

## (12) EUROPEAN PATENT APPLICATION

(21) Application number: **89120706.0**

(51) Int. Cl.⁵: **A01N 25/28**

(22) Date of filing: **08.11.89**

(30) Priority: **11.11.88 JP 286369/88**

(43) Date of publication of application:
**16.05.90 Bulletin 90/20**

(84) Designated Contracting States:
**DE NL SE**

(71) Applicant: **SUMITOMO CHEMICAL COMPANY, LIMITED**
**5-33 Kitahama 4-chome Chuo-ku**
**Osaka-shi Osaka(JP)**

(72) Inventor: **Ohtsubo, Toshiro**
**20-10, Tomogaoka-2-chome**
**Sanda-shi(JP)**
Inventor: **Tsuda, Shigenori Raitokoto Saga 506**
**43, Saga Hirosawa Goshonouchimachi**
**Ukyo-ku**
**Kyoto-shi(JP)**
Inventor: **Tsuji, Kozo**
**I3-10-9, Shigigaoka Sangocho**
**Ikoma-gun Nara-ken(JP)**

(74) Representative: **Henkel, Feiler, Hänzel & Partner**
**Möhlstrasse 37**
**D-8000 München 80(DE)**

(54) Improved pesticidal composition.

(57) A pesticidal formulation having a rapid efficacy and residual activity, comprising a mixture of a part of a poorly water-soluble pesticide encapsulated in water-insoluble polymer coatings with the remaining part of said pesticide emulsified or suspended in water.

EP 0 368 285 A2

EP 0 368 285 A2

**IMPROVED PESTICIDAL COMPOSITION**

The present invention relates to a pesticidal composition having a rapid efficacy and residual activity.

Pesticides, e.g. insecticides, acaricides, fungicides, herbicides, plant growth regulators, insect pheromones, and insect growth regulators, are used after being formulated into a variety of forms in order that when used in practice they may be easily handled by users and the efficacy of their active ingredients may be exhibited to the fullest extent. Typical examples of such forms of formulation include emulsifiable concentrates, wettable powders, dusts, oil formulations suspension concentrates, concentrated emulsions and microcapsules.

Emulsifiable concentrates are widely used because they are relatively easy to prepare and can be easily used by dilution with water. However, since organic solvents are used therein, they have problems in points of toxicity, inflammability etc. Further, in the case of pesticides whose solubility to organic solvents is very poor, formulating them into emulsifiable concentrates has been virtually impossible.

On the other hand, wettable powders can be formulated even with pesticides whose solubility to organic solvents is very poor and, since they ordinarily require no organic solvents, the problem of inflammability is also eliminated. However, since they are in the form of powder, scattering of powder may occur when they are formulated and diluted with water, etc. resulting in the risk of operators inhaling the powder.

Further, although suspension concentrates, concentrated emulsions, microcapsules, etc. have been developed in recent years, they are not fully satisfactory in the points of exhibiting both a rapid action and residual effect at the same time.

The present inventors have made extensive study to solve the above-mentioned problems. As a result, it has been found that a pesticidal formulation having both a rapid efficacy and residual activity can be obtained by microencapsulating a poorly water-soluble pesticide in minute water-insoluble polymer coatings to form so-called microcapsules, separately emulsifying or suspending in water the same poorly water-soluble pesticide to form so-called flowable formulations such as suspension concentrates, and concentrated emulsions, and then mixing the two in suitable proportions. The present invention has been accomplished on the basis of this finding.

Thus, according to the present invention, there is provided a pesticidal composition having a rapid efficacy and residual activity which comprises a mixture of a part of a poorly water-soluble pesticide microencapsulated in water-insoluble polymer coatings (hereinafter referred to as the microcapsule part) with the remaining part of said pesticide emulsified or suspended in water with dispersing agents (hereinafter referred to as the flowable part) (said formulation being hereinafter referred to as the present composition). The term "a pesticide", as a pesticidally active ingredient, used herein should be understood to indude an insecticide, acaricide, fungicide, herbicide, plant growth regulator, insect pheromone, insect growth regulator etc. and the pesticide has a solubility in water of about not more than 1000 ppm at room temperature (ca. 25° C).

The polymer coating usable in the present invention is not particularly limited so long as it is insoluble in water, and may be properly selected depending on the individual method of microencapsulating the pesticide with polymer coatings. Examples thereof include that of synthetic polymers such as polyamides, polyurethanes, polyesters, polysulfonamides, polyureas, epoxy resins, polysulfonates, polycarbonates, and ureaformaldehyde resins; or gelatin, gum arabic, sodium alginate, etc., each used alone or in a combination of two or more thereof and insolubilized.

The methods to be used for encapsulating the pesticide in the water-insoluble polymer coating may be conventional ones used for microencapsulation including the interfacial polymerization method, the in situ method, the drying in liquid method, and the coacerva tion method.

Examples of dispersing agents used in forming the microcapsule part include a natural polysaccharide such as gum arabic, semi-synthetic polysaccharide such as carboxymethyl-cellulose, synthetic polymer such as polyvinyl alcohol and polyvinylpyrrolidone, fine mineral powder such as aluminum magnesium silicate, and surface active agents such as a phosphoric ester type surface active agent and a condensation product of formaldehyde with ligninsulfonic acid salts or naphthalene-sulfonic acid salts, each used alone or in a combination of two or more thereof. When the ability of the dispersing agent used is not sufficiently acceptable, known surface active agents described, for example, in Gosei Kaimenkasseizai (Synthetic Surface Active Agents), written by Hiroshi Horiguchi, may be freely added thereto to improve dispersibility.

Emulsifying or suspending the poorly water-soluble pesticide in water may be performed by adding said pesticide or, if necessary, a mixture of the pesticide with a hydrophobic solvent, to an aqueous solution containing a surface active agent or a water-soluble polymer as a dispersing agent to give an emulsion of fine droplets or a suspension of fine particles.

2

Examples of dispersing agents used in emulsifying or suspending the pesticide, namely in forming the flowable part, include a natural polysaccharide such as gum arabic, semisynthetic polysaccharide such as carboxymethyl cellulose, synthetic polymer such as polyvinyl alcohol and polyvinylpyrrolidone, fine mineral powder such as aluminum magnesium silicate, and surface active agent such as a phosphoric ester type surface active agent and a condensation product of formaldehyde with ligninsulfonic acid salts or naphthalenesulfonic acid salts, which may be used each alone or in a combination of two or more thereof. When the ability of the dispersing agent used is not sufficiently acceptable, known surface active agents described, for example, in Gosei Kaimen-kasseizai (Synihetic Surface Active Agents), written by Hiroshi Horiguchi, may be freely added thereto to improve dispersibility.

A convenient method for dispersing or suspending in water the pesticide or a hydrophobic mixture of the pesticide with an organic solvent etc. into fine particle is, for example, the use of a dispersing machine such as a homogenizer, colloid mill and disperser when they are liquid and the use of a wet grinding machine such as a colloid mill, bead mill and sand mill when they are solid.

In forming each of the microcapsule part and the flowable part, and also in forming of the present composition, in other words after the microcapsule part and the flowable part have been mixed, there may be added as occasion demands a dispersion stabilizer or a thickening agent. For example, there may be used a natural polysaccharide such as xanthan gum and locust bean gum, fine mineral powder such as aluminum magnesium silicate and bentonite, semisynthetic polysaccharide such as carboxymethyl cellulose, and synthetic polymer such as polyacrylic acid, each alone or as a mixture of two or more thereof.

Further, if necessary, there may be added synergists such as piperonyl butoxide, stabilizers such as BHT, preservatives such as formalin, antifreezing agents such as propylene glycol and ethylene glycol, and anticrystallization agent such as phenylxylylethane.

The mixing of the microcapsule part and the flowable part may be performed in various ways as described below. In one method, the microcapsule part and the flowable part are each separately prepared as a liquid dispersion, then the dispersions are mixed, and an agueous solution comprising the above-mentioned thickening agent etc. is added thereto. In another method, to an aqueous solution containing a dispersing agent used in forming the microcapsule part and a dispersing agent used in forming the flowable part, (1) there is added a solution containing a part of the poorly water-soluble pesticide and a film material forming agent (i.e. monomers etc.) for microcapsules (i.e. polymer coatings) and is stirred until turned into fine droplets, then, if necessary, a corresponding film mateial forming agent (i.e. monomers etc.) is added, subsequently the remaining part of the poorly water-soluble pesticide is added to the solution and stirred until turned into fine droplets, and the resulting mixture is subjected to such an operation of microencapsulation by interfacial polymerization as stirring with heating in the range of 40 to 80°C for a period of 0.5 to 48 hours, or (2) there is added a part of the poorly water-soluble pesticide and is stirred until turned into fine droplets, then a solution containing the remaining part of the sparingly water-soluble pesticide and a film forming agent (e.g. monomers etc.) for microcapsules is added and stirred until turned into fine droplets, and then the resulting mixture is subjected to such an operation of microencapsulation by interfacial polymerization as stirring with heating at in the range of from 40 to 80°C for a period of 0.5 to 48 hours; and thereafter an aqueous solution comprising the above-mentioned thickening agent etc. is added thereto. The aqueous solution comprising a thickening agent etc. may be added also in any preceeding steps, if necessary.

The mixing ratio of the microcapsule part of the present invention and the flowable part of the present invention varies depending on the kind of pesticides, the kind of target pests, target diseases, target weeds, target crops, the time, method and place of the application, weather conditions etc. and is not specifically restricted. It is, however, usually from 99:1 to 10:90 by weight.

In using the present composition, it is sprayed as it is or, as occasion demands, after being diluted with water.

The pesticides which can be used in the present invention include insecticides, acaricides, fungicides, herbicides, plant growth regulators, insect pheromones, insect growth regulators and so forth. Specific examples thereof are listed below.

Insecticides and/or acaricides

O,O-Dimethyl O-4-nitro-m-tolyl phosphorothioate (fenitrothion)
S-[1,2-Bis(ethoxycarbonyl)ethyl] O,O-dimethyl phosphorodithioate (marathion)
O,O-Dimethyl O-(2-isopropyl-6-methyl-4-pyrimidinyl) phosphorothioate (diazinon)
O-(3,5,6-Trichloro-2-pyridyl) O,O-diethyl phosphorothioate (chlorpyrifos)

3

O-(2,2-Dichlorovinyl) O,O-dimethyl phosphate (dichlorvos)

O,O-Dimethyl O-(3-methyl-4-methyl thiophenyl) phosphorothioate (fenthion)

O-(sec-Butyl) phenyl N-methylcarbamate (BPMC) (RS)-α-Cyano-3-phenoxybenzyl (RS)-2-(4-chlorophenyl)-3-methylbutyrate (fenvalerate)

(S)-α-Cyano-3-phenoxybenzyl (S)-2-(4-chlorophenyl)-3-methylbutyrate (esfenvalerate)

(RS)-α-Cyano-3-phenoxybenzyl 2,2,3,3-tetrathylcyclopropanecarboxylate (fenpropathrin)

3-Phenoxybenzyl (1R)-cis, trans-chrysanthemate (d-phenothrin)

(RS)-α-Cyano-3-phenoxybenzyl (1R)-cis, trans-chrysanthemate (cyphenothrin)

3-Phenoxybenzyl (1RS)-cis, trans-3-(2,2-dichlorovinyl)-2,2-dimethylcyclopropanecarboxylate (permethrin)

α-Cyano-3-phenoxybenzyl (1R)-cis, trans-3-(2,2-dichlorovinyl)-2,2-dimethylcyclopropanecarboxylate (cypermethrin)

α-Cyano-3-phenoxybenzyl (1R)-cis, trans-3-(2,2-dibromovinyl)-2,2-dimethylcyclopropanecarboxylate (deltamethrin)

2-(4-Ethoxyphenyl)-2-methylpropyl 3-phenoxybenzyl ether (ethofenprox)

(S)-α-Cyano-3-phenoxybenzyl (1R,3S)-2,2-dimethyl-3-(1,2,2,2-tetrabromoethyl)cyclopropanecarboxylate (tralomethrin)

3,4,5,6-Tetrahydrophthalimidomethyl (1RS)-cis, trans-chrysanthemate (tetramethrin)

3,4,5,6-Tetrahydrophthalimidomethyl (1R)-cis, trans-chrysanthemate (d-tetramethrin)

(RS)-3-Allyl-2-methyl-4-oxocyclopent-2-enyl (1RS)-cis, trans-chrysanthemate (allethrin)

(RS)-3-Allyl-2-methyl-4-oxocyclopent-2-enyl (1R)-cis, trans-chrysanthemate (d-allethrin)

(S)-2-Methyl-4-oxo-3-(2-propynyl)cyclopent-2-enyl (1R)-cis, trans-chrysanthemate (prallethrin)

(RS)-1-Ethynyl-2-methyl-2-pentenyl (1R)-cis, trans-chrysanthemate (empenthrin)

5-Benzyl-3-furylmethyl (1RS)-cis, trans-chrysanthemate (resmethrin)

5-Benzyl-3-furylmethyl (1R)-cis, trans-chrysanthemate (d-resmethrin)

α-Cyano-3-phenoxybenzyl [1R, trans]-2,2-dimethyl-3-(2-chloro-2-trifluoromethylvinyl)-cyclopropanecarboxylate (cyhalothrin)

α-Cyano-3-phenoxybenzyl 2-(2-chloro-4-trifluoromethylanilino)-isovalerate (fluvalinate)

α-Cyano-3-phenoxybenzyl-1-(4-ethoxyphenyl)-2,2-dichlorocyclopropanecarboxylate (cycloprothrin)

α-Cyano-4-fluoro-3-phenoxybenzyl [1R, trans]-2,2-dimethyl-3-(2,2-dichlorovinyl)cyclopropanecarboxylate (cyfluthrin)

α-Cyano-3-phenoxybenzyl 2-(4-difluoromethoxyphenyl)-isovalerate (flucythrinate)

2-Methyl-3-phenylbenzyl [1R, trans]-2,2-dimethyl-3-(2-chloro-2-trifluoromethylvinyl)cyclopropanecarboxylate (bifenthrin)

2,3,5,6-Tetrafluoro-4-methylbenzyl [1R, trans]-2,2-dimethyl-3-(2-chloro-2-trifluoromethylvinyl)-cyclopropanecarboxylate (tefluthrin)

## Insect Growth regulators

4-Phenoxyphenyl (RS)-2-(2-pyridyloxy)propyl ether (pyriproxyfen)

Isopropyl 11-methoxy-3,7,11-trimethyldodeca- 2,4-dienoate (methoprene)

Ethyl [2-(4-phenoxyphenoxy)ethyl]carbamate (phenoxycarb)

Ethyl 3,7,11-trimethyldodeca-2,4-dienoate (hydroprene)

N-4-Chlorophenyl-N′-2,6-difluorobenzylurea (diflubenzuron)

N-3,5-Dichloro-2,4-difluorophenyl-N′-2,6-difluorobenzoylurea (teflubenzuron)

N-3,5-Dichloro-4-(3-chloro-5-trifluoromethylpyrid-2-yloxy)phenyl-N′-2,6-difluorobenzoylurea (chlorfluazon)

N-2-Fluoro-4-(2-chloro-4-trifluorophenyloxy)phenyl-N′-2,6-difluorobenzoylurea (flufenoxuron)

N-4-Trifluoromethoxyphenyl-N′-2,6-difluorobenzoylurea (triflumuron)

N-2,6-Difluorobenzoyl-N′-[2-fluoro-(1,1,2,2-tetrafluoroethoxy)phenyl]urea

## Plant growth regulators

(E)-1-(4-Chlorophenyl)-4,4-dimethyl-2-(1,2,4-triazol-1-yl)-1-penten-3-ol (uniconazol)

## Fungicides

Diisopropyl 1,3-dithiolan-2-ylidenemalonate (isoprothiolane)

N-(3,5-Dichlorophenyl)-1,2-dimethylcyclopropane-1,2-dicarboximide (procymidone)

Methyl 1-(butylcarbamoyl)-2-benzimida zolecarbamate (benomyl)

4

Dimethyl 4,4-(o-phenylene)bis(3-thioallophanate (thiophanate methyl)

(E)-1-(2,4-Dichlorophenyl)-4,4-dimethyl-2-(1,2,4-triazol-1-yl)-1-penten-3-ol (diniconazol)

O-2,6-Dichloro-4-methylphenyl O,O-dimethyl phosphorothioate (tolclofos-methyl)

1-(4-Chlorophenoxy)-3,3-dimethyl-1-(1H-1,2,4-triazol-1-yl)butanone (triadimefon)

N-Propyl-N-[2-(2,4,6-trichlorophenoxy)ethyl]imidazole-1-carboxamide (prochloraz)

(±)-2,4'-Dichloro-α-(pyrimidin-5-yl)benzhydryl alcohol (fenarimol)

N-[3-(1-methylethoxy)phenyl]-2-(trifluoromethyl)benzamide (flutolanil)

Herbicides

N-Butoxymethyl-2-chloro-2',6'-diethylacetanilide (butachlor)

5-(2,4-Dichlorophenoxy)-2-nitroanisol (chlomethoxynil)

1-(2-Chlorophenylsulfonyl)-3-(4-methoxy-6-methyl-1,3,5-triazin-2-yl)urea (chlorsulfon)

3-(4-Isopropylphenyl)-1,1-dimethylurea (isoproturon)

4-Amino-6-tert-butyl-3-methylthio-1,2,4-triazin-5-(4H)-one (metribuzin)

2,6-Dinitro-N,N-dipropyl-4-trifluoromethylaniline (trifluralin)

2-Chloro-2',6'-diethyl-N-methoxymethylacetoanilide (alachlor)

6-Chloro-N-ethyl-N'-isopropyl-1,3,5-triazinediyl-2,4-diamine (atrazine)

EXAMPLES

The invention will appear more fully from the Examples, Comparative Examples and test Examples which follow.

Example 1

To 200 g of fenitrothion (hereinafter referred to as compound (1)) were added 11 g of an addition product of toluene diisocyanate with trimethylolpropane (Sumidur®L, a registered trade name, and is manufactured by Sumitomo-Bayer Urethane K.K.) and the mixture was stirred to form a uniform solution. The solution was added to 350 g of an aqueous solution containing 5% by weight of gum arabic as a dispersing agent and stirred at room temperature (ca. 25°C) for several minutes by using a T.K. Auto-homomixer (a trade name, and manufactured by Tokushukika Kogyo K.K.) at a rotational speed of 5600 rpm until turned into fine droplets. Then, 6 g of ethylene glycol was added to the reaction system and the resulting system was allowed to react with gentle stirring for 24 hours at 60°C, whereby a suspension A of the compound (1) coated with polyurethane film was obtained.

Separately, 200 g of the compound (1) was added to 367 g of an aqueous solution containing 10% by weight of polyvinyl alcohol (Gosenol®GL-05, a registered trade name, and manufactured by Nippon Gosei Kagaku Kogyo K.K.) as a dispersing agent and stirred at room temperature for several minutes by using a T.K. Auto-homomixer (the same as described above) at a rotational speed of 7000 rpm until turned into fine droplets, whereby an oil-in-water emulsion B of the compound (1) was obtained.

The suspension A and emulsion B were mixed in various proportions shown in Table 1. Then, 567 g of each of the mixed aqueous dispersions obtained above was mixed with 433 g of an aqueous thickening agent solution containing 0.5% by weight of xanthan gum and 1.0% by weight of aluminum magnesium silicate to obtain the present composition (1), and comparative compositions (1) and (2) each containing 20% by weight of the compound (1).

Table 1

|  | Present composition (1) | Comparative composition (1) | Comparative composition (2) |
|---|---|---|---|
| Suspension A | 80 | 100 | 0 |
| Emulsion B | 20 | 0 | 100 |

5

Comparative Example 1

A mixture of 20 g of the compound (1) and 4 g of Sorpol®2495G (a registered trade name of a surface active agent manufactured by Toho Kagaku K.K.) was added to a mixture of 20 g of Carplex®#80 (a registered trade name, and manufactured by Shionogi Seiyaku K.K.), 2 g of Sanx®P 201 (a registered trade name, and manufactured by Sanyo Kokusaku Pulp K.K.) and 54 g of Radiolite®#200 (a registered trade name, and manufactured by Showa Kagaku Kogyo K.K.) and preliminarily mixed. Then, the mixture was stirred with a juice mixer for two minutes to obtain a wettable powder containing 20% by weight of the compound (1). (comparative composition (3)).

Comparative Example 2

Twenty grams of the compound (1), 10 g of Sorpol®3005X (a registered trade name of a surface active agent, manufactured by Toho Kagaku K.K.) and 70 g of xylene were mixed to obtain an emulsifiable concentrate containing 20% by weight of the compound (1). (comparative composition (4)).

Test Example 1

The present composition (1) and the comparative compositions (1) - (4) were each diluted with water to a concentration of 400 ppm in terms of the compound (1). The diluted liquids were respectively applied to kidney bean leaves in a sufficient amount by use of a small home sprayer. The insecticide-treated plants were cultivated in a glass house and the treated leaves were cut off on the day of the treatment and 1, 4 and 7 days after the treatment and respectively placed in a polyethylene cup. Then, 10 3rd instar larvae of tobacco cutworm were put therein and the percentage of dead and moribund larvae were examined after two days. The tests were repeated 3 times. The results thus obtained are shown in Table 2.

Table 2

| | Days elapsed after treatment and the percentage of dead and moribund larvae (%) | | | |
|---|---|---|---|---|
| | On the day of treatment | After 1 day | After 4 days | after 7 days |
| Present composition (1) | 93 | 83 | 97 | 93 |
| Comparative composition (1) | 67 | 77 | 90 | 77 |
| Comparative composition (2) | 100 | 73 | 20 | 7 |
| Comparative composition (3) | 100 | 80 | 17 | 7 |
| Comparative composition (4) | 100 | 67 | 23 | 10 |

Table 2 reveals that the poor efficacy in the comparative composition (1) on the day of the treatment and the short duration of residual efficacy in the comparative compositions (2), (3) and (4) are both ameliorated in the present composition (1). Further, the present composition (1) shows a higher insecticidal activity as compared with the comparative compositions at any number of days elapsed after the treatment. Thus, it is apparent that the present composition (1) shows an efficacy much greater than expected as the result of synergistic action of the efficacies of the compositions (1) and (2).

Example 2

To 100 g of fenpropathrin (hereinafter referred to as compound (2)) were added 8.0 g of Sumidur®L (the same as described above) and 92 g of phenylxylylethane, and the mixture was stirred to form a uniform solution. The solution was added to 400 g of an aqueous solution containing 10% by weight of Gosenol® GL-05 (the same as described above) as a dispersing agent and stirred at room temperature for several minutes by using a T.K. Auto-homomixer (the same as described above) at a rotational speed of 6500 rpm until turned into fine droplets. The resulting dispersion was allowed to react with gentle stirring for 24 hours at 60°C, whereby a suspension C of the compound (2) coated with polyurethane film was obtained. Separately, 100 g of phenylxylylethane was added to 100 g of the compound (2) to form a uniform solution. The solution was added to 400 g of an aqueous solution containing 10% by weight of Gosenol®GL-05 (the same as described above) and stirred at room temperature for several minutes by using a T.K. Auto-homomixer (the same as described above) at a rotational speed of 7500 rpm, whereby an oil-in-water type emulsion D of the compound (2) was obtained.

Suspension C and emulsion D obtained above were mixed in proportions shown in Table 3. Then, 600 g of each of the resulting mixtures and 400 g of an aqueous thickening agent solution containing 0.5% by weight of xanthan gum and 1.0% by weight of aluminum magnesium silicate were mixed to obtain the present composition (2) containing 10% by weight of the compound (2) and comparative compositions (5) and (6).

Table 3

|  | Present composition (2) | Comparative composition (5) | Comparative composition (6) |
|---|---|---|---|
| Suspension C | 75 | 0 | 100 |
| Emulsion D | 25 | 100 | 0 |

Test Example 2

The present composition (2) and the comparative compositions (5) and (6) obtained in Example 2 were diluted 1000-fold with water. The diluted liquids were respectively applied to cabbage leaves on a turntable at a rate of 50 ml/5 pots by use of a spray gun. Thereafter, the residual efficacy against tobacco cutworms were examined in the same manner as in Test Example 1. The tests were repeated 3 times. The results thus obtained are shown in Table 4.

Table 4

|  | Days elapsed after treatment and the percentage of dead and moribund larvae (%) | | |
|---|---|---|---|
|  | On the day of treatment | After 2 days | After 7 days |
| Present composition (2) | 100 | 100 | 83 |
| Comparative composition (5) | 100 | 97 | 30 |
| Comparative composition (6) | 90 | 100 | 67 |

As compared with the comparative compositions (5) and (6), the present composition (2) shows a higher efficacy both on the day of the treatment and 7 days after the treatment. Particularly, the efficacy exhibited 7 days after the treatment is much greater than each of the efficacies of the comparative compositions (5) and (6) as the result of synergistic action of the efficacies of the compositions (5) and (6).

Test Example 3

The present composition (2) and the comparative compositions (5) and (6) obtained in Example 2 were diluted 1000-fold with water. The diluted liquids were respectively applied to kindney bean seedlings which has been inoculated with about 30 female adult carmine mites 3 days before the application, on a turntable at a rate of 50 ml/pot by use of a spray gun. These seedlings were allowed to stand in the test room, and the number of female adult mites were examined after the lapse of predetermined days to determine the survival rate. The tests were repeated 3 times. The results thus obtained are shown in Table 5.

Table 5

|  | Days elapsed after treatment and survival rate of mites (%) (sum of 3 pots) | | | | |
|  | Before treatment | After 7 days | After 14 days | After 18 days | After 27 days |
| --- | --- | --- | --- | --- | --- |
| Present composition (2) | 94 | 1 | 2 | 7 | 6 |
| Comparative composition (5) | 93 | 1 | 35 | 36 | 31.5 |
| Comparative composition (6) | 97 | 0 | 3 | 7 | 19 |

It is apparent that the present composition (2) shows an excellent efficacy against carmine mites as the result of synergistic action of the efficacies of the comparative compositions (5) and (6) as in Example 2.

Further, the results of Test Examples 2 and 3 reveal that the present composition (2) exerts a good efficacy both against tobacco cutworms and against carmine mites, thus clearly exhibiting a broader insecticidal spectrum than those of the comparative compositions (5) and (6).

Test Example 4

The present composition (2) and the comparative compositions (5) and (6) obtained in Example 2 were tested for their acute oral toxicity by use of 10 male and female rats in all. The tests were conducted at two doses of 0.3 ml/kg and 0.6 ml/kg. The results thus obtained are shown in Table 6.

Table 6

|  | Dose and number of dead rats | |
|  | (number in a total of 10 rats) | |
|  | 0.3 ml/kg | 0.6 ml/kg |
| --- | --- | --- |
| Present composition (2) | 5 | 9 |
| Comparative composition (5) | 9 | 10 |
| Comparative composition (6) | 2 | 7 |

The present composition (2) shows an acute oral toxicity higher than that of the comparative composition (6) but lower than that of the comparative composition (5), the 50% lethal dose being about 0.3 ml/kg. Taking this result together with those of Test Examples 2 and 3, it can be concluded that the present composition (2) has an improved oral toxicity in mammals and yet is excellent in its efficacy.

Example 3

Ten grams of Sumidur®L (the same as described above) was added to 200 g of d-phenothrin (hereinafter referred to as compound (3)) and stirred to form a uniform mixture. The mixture was added into 375 g of an aqueous solution containing 10% by weight of gum arabic as a dispersing agent and stirred at room temperature for several minutes by using a T.K. Auto-homomixer (the same as described above) at a rotational speed of 7600 rpm until turned into fine droplets. Then, 15 g of ethylene glycol was added thereto, and the resulting mixture was allowed to react with gentle stirring for 24 hours at 60°C (suspension E).

Separately, 200 g of the compound (3) was added into 400 g of an aqueous solution containing 10% by weight of gum arabic as a dispersing agent and stirred at room temperature for several minutes by use of a T.K. Auto-homomixer (the same as described above) at a rotational speed of 7000 rpm until turned into fine droplets (emulsion F).

Then, 300 g of the suspension E, 300 g of the emulsion F, and 400 g of an aqueous solution containing 0.5% by weight of xanthan gum and 1% by weight of aluminum magnesium silicate were mixed, whereby a composition was obtained which contained 10% by weight of the compound (3) coated by polyurethane film and 10% by weight of the compound (3) present in the form of fine oil droplets (present composition (3)).

### Comparative Example 3

Six hundred grams of the suspension E prepared in the same manner as in Example 3 and 400 g of an aqueous solution containing 0.5% by weight of xanthan gum and 1% by weight of aluminum magnesium silicate were mixed, whereby a composition was obtained which contained 20% by weight of the compound (3) coated by polyurethane film (comparative composition (7)).

### Comparative Exampel 4

Six hundred grams of the emulsion F prepared in the same manner as in Example 3 and 400 g of an aqueous solution containing 0.5% by weight of xanthan gum and 1% by weight of aluminum magnesium silicate were mixed, whereby a composition was obtained which contained 20% by weight of the compoud (3) present in the form of fine oil droplets (comparative composition (8)).

### Example 4

In exactly the same manner as in Example 3 except for using a mixture of 100 g of cyphenothrin (hereinafter referred to as compound (4)) with 100 g of phenylxylylethane in place of the compound (3), a composition was obtained which contained 10% by weight of the compound (4) coated by polyurethane film (present composition (4)).

### Comparative Example 5

In the same manner as in Comparative Example 3, a composition was obtained which contained 10% by weight of only the compound (4) coated by polyurethane film which had been prepared in Example 4 (comparative composition (9)).

### Comparative Example 6

In the same manner as in Comparative Example 4, a composition was obtained which contained 10% by weight of only the compound (4) present in the form of fine oil droplets which had been prepared in Example 4 (comparative composition (10)).

### Test Example 5

The present compositions (3) and (4) and the comparative compositions (7), (8), (9) and (10) were respectively diluted 40-fold with water. Each of the diluted liquids was applied uniformly onto a plywood pannel of 15 cm square at a rate of 50 ml/m$^2$ by using a spray gun and then dried for 2 hours. Thereafter, a plastic ring 12 cm in diameter and 5 cm in height whose inner wall had been coated with butter to prevent escape was provided thereon and German cockroach adults were released in a group of 10 into the ring. After compulsory contact of 24 hours, all of the test cockroaches were recovered into a recovery receptacle containing water and food, and the mortality after 3 days was determined. Further, mortality were determined by using the same treated pannel but after the lapse of 2, 4 and 8 weeks from the treatment. The results thus obtained are shown in Table 7.

Table 7

| Tests formulation | Mortality (%) | | | |
|---|---|---|---|---|
| | Immediately after treatment | 2 Weeks after treatment | 4 Weeks after treatment | 8 Weeks after treatment |
| Present composition (3) | 100 | 90 | 97 | 23 |
| Comparative composition (7) | 100 | 100 | 100 | 53 |
| Comparative composition (8) | 23 | 13 | 0 | 0 |
| Present composition (4) | 100 | 83 | 90 | 47 |
| Comparative composition (9) | 100 | 100 | 100 | 80 |
| Comparative composition (10) | 27 | 7 | 0 | 0 |

Test Example 6

A deep Petri dish in which 10 German cockroach adults were put was placed on the bottom of a glass box 70 $^{cm}$ x 70 $^{cm}$ x 70 $^{cm}$ in dimension. The Petri dish had been coated with butter to prevent the cockroaches from escaping to the outside. Into the glass box was sprayed with a spray gun 1.5 ml of each of the 20-fold diluted aqueous solution of the present compositions (3) and (4) and the comparative compositions (7), (8), (9) and (10). The knock-down rate of the cockroaches was observed with the lapse of time after the spraying. After exposure of 10 minutes all the cockroaches were moved into a new plastic cup and kept therein with diet and water given thereto until the next day to examine the mortality rate. The results thus obtained are shown in Table 8.

Table 8

| Test formulation | Knock-down rate (%) | | | | Mortality on the next day (%) |
|---|---|---|---|---|---|
| | 2 min. | 5 min. | 7 min. | 10 min. | |
| Present composition (3) | 0 | 10 | 30 | 70 | 50 |
| Comparative composition (7) | 0 | 0 | 0 | 10 | 10 |
| Comparative composition (8) | 10 | 30 | 50 | 90 | 80 |
| Present composition (4) | 10 | 30 | 70 | 90 | 90 |
| Comparative composition (9) | 0 | 0 | 10 | 10 | 20 |
| Comparative composition (10) | 20 | 50 | 80 | 100 | 100 |

The results of Test Examples 5 and 6 show that when the present composition (3) is compared with the comparative compositions (7) and (8), although the composition (3) is slightly inferior to the comparative composition (7) in residual contact efficacy on the plywood pannel, it exhibits the same excellent efficacy as the comparative composition (8) in direct spraying. On the other hand, the comparative composition (7) is very poor in direct spraying efficacy though it is excellent in residual contact efficacy, whereas the comparative composition (8) is poor in residual eontact efficacy though it is excellent in direct spraying efficacy.

It can be seen that exactly the same applies to the relation between the present composition (4) and the comparative compositions (9) and (10).

Thus, the present compositions are excellent both in direct spraying efficacy and in residual efficacy, so that they can be used for a variety of purposes.

Example 5

In a 2 ℓ stainless steel beaker were placed 120 g of tolclofos-methyl (hereinafter referred to as compound (5)), 300 g of a 20% by weight aqueous gum arabic solution and 600 g of glass beads of 2 mm in diameter, and the mixture was stirred with cooling for 12 hours by means of a Labo-stirrer Model LR-410 (manu factured by Yamato Kagaku K.K.) fitted with a pulverizing disc of 5 cm in diameter, to obtain a suspension G of the compound (5).

Eighty four grams of the suspension G and 60 g of a 20% by weight aqueous gelatin solution were mixed at a temperature of 50°C to obtain 144 g of a dispersion H. Then, 144 g of the dispersion H was added into 700 g of water, and acetic acid was added thereto while stirring with a T.K. Auto-homomixer (the same as described above), to adjust the pH to 3.5. The temperature during the time was kept at 50°C and the speed of rotation kept at 7500 rpm. Then, cooling of the system was initiated with stirring and, when the temperature reached 15°C, 6 ml of 37% aqueous formaldehyde solution was added to the system, the system was further cooled and, when the temperature reached 10°C, the pH of the system was raised to 9 with a 10% by weight aqueous NaOH solution. Then, the temperature was raised at the rate of 1°C/minute until it reached 50°C and stirring was continued under the conditions for 2 hours.

Further, the microencapsulated compound (5) was collected by means of a glass filter and made up to a total of 100 g by addition of deionized water, whereby a suspension I containing 24% by weight of the microencapsulated compound (5) was obtained. Then, 84 g of the suspension G, 100 g of the suspension I, 16 g of deionized water and 200 g of an aqueous thickening agent solution containing 0.5% by weight of xanthan gum and 1% by weight of aluminum magnesium silicate were mixed, whereby a composition was obtained which contained 6% by weight of the microeucapsulated compound (5) and 6% by weight of the un-microencapsulated compound (5).

As described above, the composition of the present invention is highly useful since it exhibits both excellent initial efficacy and excellent residual efficacy and has a lowered toxicity of a practically allowable level.

Example 6

To 100 g of compound (1) were added 4 g of Sumidur®L (the same as described above) and the mixture was stirred to form a uniform solution. The solution was added to 350 g of an aqueous solution containing 5% by weight of gum arabic as a dispersing agent and stirred at room temperature for several minutes by using a T.K. Auto-homomixer (the same as described above) at a rotational speed of 5000 rpm until turned into fine droplets to obtain a dispersion. To the dispersion were added further 100 g of the compound. The resulting mixture was stirred for several minutes by using a T.K. Auto-homomixer (the same as described above) at a rotational speed of 5000 rpm and further stirred gently for 12 hours at 70°C to obtain a dispersion. To the dispersion was added an aqueous thickening agent solution containing 0.3% by weight of xanthan gum and 1.0% by weight of aluminum magnesium silicate to a total amount of 1000 g, whereby a pesticidal composition containing 20% by weight of compound (1) was obtained.

Example 7

100 g of compound (1) were added to 350 g of an aqueous solution containing 10% by weight of polyvinyl alcohol as a dispersing agent and the mixture was stirred at room temperature for several minutes by using a T.K. Auto-homomixer (the same as described above) at a rotational speed of 7000 rpm until turned into fine droplets to obtain a dispersion. To the dispersion were added a mixture of 5 g of a self-condensated product of hexamethylene diisocyanate (Sumidur®N, a registered trade name, and is manufactured by Sumitomo-Bayer Urethane K.K.) and 100 g of compound (1). The resulting mixture was stirred for several minutes at a rotational speed of 7000 rpm, and then stirred gently for 24 hours at 60°C. To the resulting dispersion were added 50 g of propylene glycol, and then added a thickening agent containing 1.0% by weight of magnesium silicate to a total amount of 1000 g, whereby a pesticidal composition containing 20% by weight of compound (1) was obtained.

Example 8

A mixture of 10 g of Sumidur®L (the same as described above), 50 g of pyriproxyfen and 50 g of xylene was stirred to form a uniform solution. The solution was added to 350 g of an aqueous solution containing 10% by weight of polyvinyl alcohol and stirred for several minutes by using a T.K. Auto-homomixer (the same as described above) at a rotational speed of 6000 rpm until turned into fine droplets to obtain a dispersion. To the dispersion was added a mixture of 50 g of pyriproxyfen and 50 g of xylene. The resulting mixture was stirred for several minutes by using a T.K. Auto-homomixer (the same as described above). The resulting dispersion was stirred gently for 24 hours at 60°C and an aqueous thickening agent solution containing 0.6% by weight of xanthan gum and 1% by weight of aluminum magnesium silicate was added thereto to a total amount of 1000 g, whereby a pesticidal composition containing 10% by weight of pyriproxyfen was obtained.

Example 9

Analogously to Example 8 except replacement of pyriproxyfen by N-2,6-difluorobenzoyl-N'-[2-fluoro-(1,1,2,2-tetrafluoroethoxy)phenyl]urea in one tenth amount of the former compound, a pesticidal composition containing 1% by weight of the latter compound was obtained.

**Claims**

(1) A pesticidal comosition having a rapid efficacy and residual activity comprising a mixture of a part of a poorly water-soluble pesticide encapsulated in water-insoluble polymer coatings with the remaining part of said pesticide emulsified or suspended in water with dispersing agents.

(2) A process for preparation of a pesticidal composition having a rapid efficacy and residual activity, which comprises enveloping a poorly water-soluble pesticide in water-insoluble polymer coatings to form microcapsule parts, separately emulsifying or suspending the same poorly water-soluble pesticide in water with dispersing agents to form flowable parts, and then, mixing the resulting microcapsule and flowable parts in a suitable proportion.

(3) A process for preparation of a pesticidal composition having a rapid efficacy and residual activity, which comprises adding to an aqueous solution containing a dispersing agent a solution containing a poorly water-soluble pesticide and a film material forming agent for microcapsulation, stirring the resulting solution until turned into fine droplets, adding thereto a poorly water-soluble pesticide, stirring until turned into fine droplets, and heating while stirring for microcapsulation.

(4) A process for preparation of a pesticidal composition having a rapid efficacy and residual activity, which comprises adding a poorly water-soluble pesticide to an aqueous solution containing a dispersing agent, stirring until turned into fine droplets, adding thereto a solution containing a poorly water-soluble pesticide and a film material forming agent for microcapsulation, stirring until turned into fine droplets, and heating while stirring for microcapsulation.